# EUROPEAN PATENT SPECIFICATION

(11) **EP 3 764 821 B1**
(45) Date of publication and mention of the grant of the patent: **31.08.2022**
(21) Application number: 19708379.3
(22) Date of filing: 12.02.2019
(51) Int. Cl.: A23P 30/40, A23L 29/00, A23L 29/10, A23L 19/00, A23L 19/12

(54) **FOAM CONTROL**
SCHAUMKONTROLLE
RÉGULATION DE MOUSSE

(30) Priority: 16.03.2018 US 201862644015 P
(43) Date of publication of application: 20.01.2021
(73) Proprietor: Dow Global Technologies LLC, Midland, MI 48674 (US)
(72) Inventor: CHEN, Xue, Midland Michigan 48674 (US); TULCHINSKY, Michael L., Midland, MI 48640 (US); KING, Stephen W., League City, TX 77573 (US)
(74) Representative: Jewell, Catherine Mary
(86) International application number: PCT/US2019/017648
(87) International publication number: WO 2019/177726

(56) References cited:
- US-A- 3 990 905
- US-A1- 2014 155 312
- DATABASE COMPENDEX [Online] ENGINEERING INFORMATION, INC., NEW YORK, NY, US; October 2010 (2010-10), LEE P-R ET AL: "Evolution of volatile compounds in papaya wine fermented with three Williopsis saturnus yeasts", XP002790180, Database accession no. E20111213809076
- DATABASE BIOSIS [Online] BIOSCIENCES INFORMATION SERVICE, PHILADELPHIA, PA, US; December 2006 (2006-12), SELLI SERKAN ET AL: "Characterization of aroma-active compounds in rainbow trout (Oncorhynchus mykiss) eliciting an off-odor", XP002790181, Database accession no. PREV200700072866
- DATABASE BIOSIS [Online] BIOSCIENCES INFORMATION SERVICE, PHILADELPHIA, PA, US; July 2015 (2015-07), AJAYI OLUFUNMILAYO E ET AL: "Semiochemical modulation of host preference of Callosobruchus maculatus on legume seeds", XP002790182, Database accession no. PREV201500739091

## Description

### BACKGROUND

The processes for manufacturing foodstuffs occasionally cause unwanted foam generation. Mechanical methods of foam management have limited effectiveness. Instead, foam control agents are added to the manufacturing process to reduce foam generation. For food and pharma applications, traditional foam control agents include ethylene oxide-based, propylene oxide-based and silicone-based agents. However, these incumbent foam control agents are becoming disfavored in the food industry. Foam-control agents that are biodegradable, and renewably sourced are desired. USA-3 990 905 discloses an antifoam composition for abating and preventing foam formation in sugar beet raw liquor.

### SUMMARY

The present invention is defined by the appended claims. A method for controlling foam comprising providing a food composition comprising a foam control agent and a foodstuff, the foam control agent comprising a composition as shown in Equation (1) 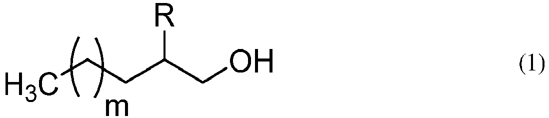 wherein R is methyl, ethyl, propyl, butyl, pentyl, hexyl, heptyl, octyl, nonyl, decyl, undecyl, dodecyl tridecyl, or tetradecyl, and m is 1 to 14; and processing the food composition.

A food composition comprising a foodstuff and a foam control agent, the foam control agent comprising a composition as shown in Equation (1) 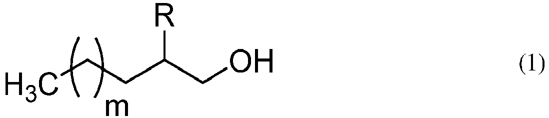 wherein R is methyl, ethyl, propyl, butyl, pentyl, hexyl, heptyl, octyl, nonyl, decyl, undecyl, dodecyl tridecyl, or tetradecyl, and m is 1 to 14.

### DETAILED DESCRIPTION

The present disclosure describes methods for controlling foam. The methods described herein are particularly relevant to food processing applications. During foodprocessing foam can be generated at various points in the production process. The foam is caused by the presence of surface-active substances such as proteins, fatty acids and sugars when aeration (generated for example by mechanical agitation, mixing, washing, extraction, stirring, sparging, etc.) occurs during processing. Foam impairs the food processing process in many different ways and greatly disrupts the process flow. The methods described herein are effective in limiting the amount of foam generated in a food processing application as compared to a similar food process where the methods described herein are not used. Without being limited by theory, it is expected that the methods of the present disclosure have features that both (1) limit the amount of foam generated in a food process (also known as anti-foam agents) and (2) minimize or eliminate generated foams (also known as defoaming agents). The food composition and the foam control agent are combined as is known in the art, for example, by mixing.

The methods described herein include providing a foam control agent to a foodstuff. The foam control agent comprises the composition shown in Equation (1): 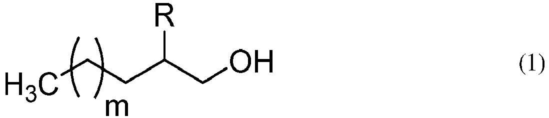 wherein R is propyl, butyl, pentyl, hexyl, heptyl, octyl, nonyl, decyl, undecyl, dodecyl tridecyl, or tetradecyl, and m is 1 to 14;

The composition of Equation (1) is an alcohol that is the reaction product of the Guerbet reaction, a reaction that converts a primary aliphatic alcohol into a β-alkylated alcohol. The synthesis of these alcohols is described in the Experimental section. The composition of Equation (1) is C₆ to C₃₂. 2-ethylhexanol and 2-propylheptanol are examples of compositions with the definition of Equation (1) and both are available for purchase from Sigma Aldrich. The foam control agent optionally further includes a solvent, a surfactant, an emulsifier, or a combination thereof. The foam control agent contains from 0.5 to 100 percent, by weight, of the composition of Equation (1). Alternatively, the foam control agent contains from 5 to 100 percent, by weight, of the composition of Equation (1). Alternatively, the foam control agent contains from 10 to 100 percent, by weight, of the composition of Equation (1). Alternatively, the foam control agent contains from 15 to 100 percent, by weight, of the composition of Equation (1). Alternatively, the foam control agent contains from 20 to 100 percent, by weight, of the composition of Equation (1). Alternatively, the foam control agent contains from 25 to 100 percent, by weight, of the composition of Equation (1). Alternatively, the foam control agent contains from 30 to 100 percent, by weight, of the composition of Equation (1).

The optional solvent contained in the foam control agent is selected to be suitable for dissolving or dispersing the composition of Equation (1). Such solvents include hydrocarbons (both aromatic and aliphatic), and oxygenated solvents (alcohols, ketones, aldehydes, ethers, glycol ethers, esters, and glycol ether esters).

The optional surfactant or emulsifier contained in the foam control agent is selected to be suitable for improving the wettability of the foam control agent on the foodstuff, or forming an emulsion with the composition of Equation (1). The optional surfactant or emulsifier has an amount ranging from 0.1-30% by weight of the composition of Equation (1).

The optional surfactant or emulsifier may be anionic, cationic or nonioic. Examples of suitable anionic surfactants or emulsifiers are alkali metal, ammonium and amine soaps; the fatty acid part of such soaps contains preferably at least 16 carbon atoms. The soaps can also be formed "in situ;" in other words, a fatty acid can be added to the oil phase and an alkaline material to the aqueous phase.

Other examples of suitable anionic surfactants or emulsifiers are alkali metal salts of alkyl-aryl sulfonic acids, sodium dialkyl sulfosuccinate, sulfated or sulfonated oils, e.g., sulfated castor oil; sulfonated tallow, and alkali salts of short chain petroleum sulfonic acids.

Suitable cationic surfactants or emulsifiers are salts of long chain primary, secondary or tertiary amines, such as oleylamide acetate, cetylamine acetate, didodecylamine lactate, the acetate of aminoethyl-aminoethyl stearamide, dilauroyl triethylene tetramine diacetate, 1-aminoethyl-2-heptadecenyl imidazoline acetate; and quaternary salts, such as cetylpyridinium bromide, hexadecyl ethyl morpholinium chloride, and diethyl di-dodecyl ammonium chloride.

Examples of suitable nonionic surfactants or emulsifiers are condensation products of higher fatty alcohols with ethylene oxide, such as the reaction product of oleyl alcohol with 10 ethylene oxide units; condensation products of alkylphenols with ethylene oxide, such as the reaction product of isoctylphenol with 12 ethylene oxide units; condensation products of higher fatty acid amides with 5, or more, ethylene oxide units; polyethylene glycol esters of long chain fatty acids, such as tetraethylene glycol monopalmitate, hexaethyleneglycol monolaurate, nonaethyleneglycol monostearate, nonaethyleneglycol dioleate, tridecaethyleneglycol monoarachidate, tricosaethyleneglycol monobehenate, tricosaethyleneglycol dibehenate, polyhydric alcohol partial higher fatty acid esters such as sorbitan tristearate, ethylene oxide condensation products of polyhydric alcohol partial higher fatty acid esters, and their inner anhydrides (mannitol-anhydride, called Mannitan, and sorbitol-anhydride, called Sorbitan), such as glycerol monopalmitate reacted with 10 molecules of ethylene oxide, pentaerythritol monooleate reacted with 12 molecules of ethylene oxide, sorbitan monostearate reacted with 10-15 molecules of ethylene oxide, mannitan monopalmitate reacted with 10-15 molecules of ethylene oxide; long chain polyglycols in which one hydroxyl group is esterified with a higher fatty acid and other hydroxyl group is etherified with a low molecular alcohol, such as methoxypolyethylene glycol 550 monostearate (550 meaning the average molecular weight of the polyglycol ether). A combination of two or more of these surfactants may be used; e.g., a cationic may be blended with a nonionic or an anionic with a nonionic.

The foam control agent may further comprise one or more additive. Examples of additives include ethylene oxide / propylene oxide block copolymers, butylene oxide / propylene oxide block copolymers, ethylene oxide / butylene oxide block copolymers, waxes, or silicone-based materials.

The "food composition" described herein is a combination of the foam control agent and the foodstuff. The foodstuff is either a potato derivative or a beet derivative, or combinations thereof. As used herein, derivative means that the foodstuff is processed. Examples of such processes include, washing, slicing, fermenting, grating, crushing, peeling, and mixing. The beet derivative is preferably a sugarbeet derivative. The foodstuff may be pre-processed according to one or more processing steps prior to addition of the foam control agent. Alternatively, the foodstuff may be washed between processing steps, whereby a foam control agent is added separately during one or more of the processing steps.

The foam control agent is added to the foodstuff in sufficient quantity to achieve the level of foam control necessary for the process. It is recognized that different food processing techniques result in varying levels of foam generation, and as such, require varying amounts of foam control agent to achieve the desired result. The amount of foam control agent added to the food stuff is measured as a percentage of the combined weight of the foam control agent and the foodstuff (total weight of the food composition), where the quantity of the foam control agent is from 0.01 to 5 percent, by weight, of the total weight of the food composition, preferably, 0.1 to 1 percent, by weight, of the total weight of the food composition.

### EXAMPLES

### Synthesis of mixed C₈-C₁₀ Guerbet alcohols:

A 2 wt% solution of sodium hydroxide in water (50mL) was transferred via vacuum to a 300 mL Parr reactor. Pentanal (48.2 g, 0.56 moles) and butyraldehyde (40.4 g, 0.56 moles) were then pre-mixed, and subsequently added to the reactor. The reactor was pressurized with nitrogen and rapid stirring (900 rpm) while heating to 120°C, after reaching temperature the reaction mixture was stirred for two hours resulting in the formation of C₈-C₁₀ enal intermediates. The C₈-C₁₀ enal intermediates were charged into a 500 mL shot tube containing 25 grams of a RANEY^{®} Nickel 5887-200 catalyst (available from Grace Catalyst Technologies) with five nitrogen pressurization-ventingvacuum cycles prior to addition to the reactor. The reaction was controlled at approximately 25°C and 1000 rpm during the addition. Hydrogen control pressure (500 psig) and time zero were established when the temperature was ramped to the desired set point. The hydrogenation was performed at 150 °C and 500-750 psig. The end of the reaction was determined once hydrogen consumption stopped. At the conclusion of the run, the C8-C10 Guerbet alcohol product was drained and filtered to remove catalyst fines. This Guerbet alcohol mixture was used to test as a foam control agent without purification (Example 5).

### Refining of mixed C₈-C₁₀ Guerbet alcohols to obtain C₉ Guerbet alcohol

From a sample of the mixed C₈-C₁₀ Guerbet alcohols prepared as described above, a mixture of C₉ Guerbet alcohols (2-ethylheptan-1-ol and 2-propylhexan-1-ol) were distilled using a spinning band distillation column under vacuum with a reflux ratio of ca. 10. This mixture was used to test as a foam control agent (Example 2)

**Example** 1. 2-ethyl-1-hexanol (C8 Guerbet Alcohol), commercially available from Sigma-Aldrich.

**Example 2.** C9 Guerbet Alcohol mixture, prepared as described above.

**Example 3.** 2-propylheptanol (C10 Guerbet alcohol), commercially available from Evonik Company.

**Example 4.** 2-butyl-1-octanol (C11 Guerbet Alcohol), commercially available from Sigma-Aldrich.

**Example 5.** C8-C10 Guerbet Alcohol mixture, prepared as described above.

**Example 6.** 2-butyl-1-octanol (C11 Guerbet Alcohol) and 2-ethyl-1-hexanol (C8 Guerbet Alcohol) were mixed together at room temperature at the weight ratio of 1:1.

The following alcohols were used as comparative examples and are available commercially. Some comparative examples are branched alcohols, but not Guerbet alcohols. They were used without further purification:
**Comparative 1:** 4-Methyl-2-pentanol obtained from Sigma-Aldrich.
**Comparative 2:** Benzyl alcohol obtained from Sigma-Aldrich.
**Comparative 3:** 2-Methyl-1-propanol obtained from Sigma-Aldrich.
**Comparative 4:** TMN alcohol, 2,6,8-trimethyl-4-nonanol, obtained from Dow Chemical.

### Foam Control Performance Evaluation

Potatoes were washed in water, peeled and sliced. 780 g of sliced potatoes and 520 g of deionized (DI) water were added to a kitchen food processor and processed for 1 minute. A potato slurry was generated, which was filtered through filter paper and the liquid was used to evaluate the foam control agents. This liquid is referred to as potato liquor.

Similarly, sugar beets were washed in water, peeled and sliced. 780 g of sliced sugar beets and 520 g of DI water were added to a food processor and processed for 1 minute. A sugar beet slurry was generated, which was filtered through filter paper and the liquid was used to evaluate the foam control agents. This liquid is referred to as sugar beet liquor.

For each of the alcohols described in the Examples and Comparative Examples, two samples were prepared. The first sample contained 0.5 g of the alcohol described in the respective Example or Comparative Example and 99.5 g of potato liquor to give 100 g of material for evaluation. The second sample contained 0.5 g of the alcohol described in the respective Example or Comparative Example and 99.5 g of beet liquor to give 100 g of material for evaluation. Two control samples were prepared. The first sample contained 100 g of potato liquor without any alcohol. The second sample contained 100 g of beet liquor without any alcohol.

A sparge tube test was utilized to evaluate the performance of Guerbet alcohols as foam control agents. The description of this testing procedure is known in the literature : N. D. Denkov, "Mechanisms of Foam Destruction by Oil-Based Antifoams," Langmuir 2004, 20 (22), 9463-9505. The "foam control efficiency" of a material was evaluated by measuring its effect on the foam height. 100g of each liquid sample described above was added separately into a 1000 mL glass cylinder with a diameter of 5 cm. A vertical gas sparging tube fitted with a sintered glass frit was placed at the cylinder bottom and air was bubbled from the bottom of the cylinder. Air flow was controlled by an Ametek Lo-Flo 0-10 Float Meter with the setting at 1. Foam heights were recorded during the first 10 minutes after air flow was applied. If a foam height reached 1000mL within the first 10 minutes, the experiment was stopped.

Tables 1 and 2 are foam volumes of sugar beet liquor and potato liquor, respectively, as a function of time, for the Examples, Comparative Examples and Control samples. In the Tables, the Examples are abbreviated as "ex." and the comparative examples are abbreviated as "cp.". The unit of numerical value of foam volume is mL. As shown in the tables, for both potato liquor and sugar beet liquor, the presence of Guerbet alcohols resulted in foam levels which were much lower than the comparative examples without Guerbet alcohols, where foam volumes reached at least 1000 mL within 5 minutes.

**Table 1: Foam volume (mL) increase as a function of time for sugar beet liquor**

| | 0.5 min | 1 min | 2 min | 3 min | 4 min | 5 min | 6 min | 7min | 8 min | 9 min | 10 min |
|---|---|---|---|---|---|---|---|---|---|---|---|
| Control | 480 | 600 | >1000 | >1000 | >1000 | >1000 | >1000 | >1000 | >1000 | >1000 | >1000 |
| ex. 1 | 20 | 20 | 20 | 20 | 20 | 20 | 20 | 20 | 20 | 20 | 20 |
| ex. 2 | 50 | 50 | 50 | 60 | 60 | 60 | 60 | 60 | 60 | 60 | 60 |
| ex. 3 | 100 | 80 | 80 | 80 | 60 | 60 | 60 | 60 | 60 | 60 | 60 |
| ex. 4 | 200 | 220 | 310 | 410 | 450 | 400 | 350 | 350 | 350 | 350 | 350 |
| ex. 5 | 50 | 50 | 50 | 50 | 50 | 50 | 50 | 50 | 50 | 50 | 50 |
| ex. 6 | 140 | 150 | 220 | 250 | 250 | 250 | 300 | 300 | 300 | 300 | 300 |
| cp. 1 | 450 | 530 | >1000 | >1000 | >1000 | >1000 | >1000 | >1000 | >1000 | >1000 | >1000 |
| cp. 2 | 500 | 580 | >1000 | >1000 | >1000 | >1000 | >1000 | >1000 | >1000 | >1000 | >1000 |
| cp. 3 | 450 | 510 | 850 | >1000 | >1000 | >1000 | >1000 | >1000 | >1000 | >1000 | >1000 |
| cp. 4 | 350 | 430 | 710 | >1000 | >1000 | >1000 | >1000 | >1000 | >1000 | >1000 | >1000 |

**Table 2: Foam volume (mL) increase as a function of time for potato liquor**

| | 0.5 min | 1 min | 2 min | 3 min | 4 min | 5 min | 6 min | 7min | 8 min | 9 min | 10 min |
|---|---|---|---|---|---|---|---|---|---|---|---|
| Control | 320 | 600 | >1000 | >1000 | >1000 | >1000 | >1000 | >1000 | >1000 | >1000 | >1000 |
| ex. 1 | 90 | 90 | 100 | 100 | 100 | 100 | 120 | 120 | 120 | 120 | 120 |
| ex. 2 | 330 | 360 | 410 | 410 | 410 | 410 | 410 | 390 | 390 | 390 | 390 |
| ex. 3 | 310 | 340 | 350 | 370 | 370 | 370 | 370 | 370 | 370 | 370 | 370 |
| ex. 4 | 400 | 450 | 450 | 630 | 670 | 670 | 670 | 670 | 650 | 650 | 650 |
| ex. 5 | 300 | 350 | 410 | 350 | 370 | 370 | 370 | 370 | 370 | 370 | 370 |
| ex. 6 | 420 | 470 | 520 | 520 | 520 | 520 | 520 | 520 | 520 | 520 | 520 |
| cp. 1 | 550 | 580 | 750 | 820 | 870 | >1000 | >1000 | >1000 | >1000 | >1000 | >1000 |
| cp. 2 | 570 | 630 | >1000 | >1000 | >1000 | >1000 | >1000 | >1000 | >1000 | >1000 | >1000 |
| cp. 3 | 440 | 510 | 650 | 750 | 840 | >1000 | >1000 | >1000 | >1000 | >1000 | >1000 |
| cp. 4 | 430 | 470 | 740 | 840 | 700 | 830 | 830 | 830 | 830 | 830 | 830 |

## Claims

1. A method for controlling foam comprising:
providing a food composition comprising a foam control agent and a foodstuff, the foam control agent comprising a composition as shown in Equation (1) 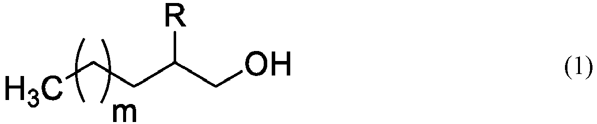 wherein R is methyl, ethyl, propyl, butyl, pentyl, hexyl, heptyl, octyl, nonyl, decyl, undecyl, dodecyl, tridecyl, or tetradecyl, and m is 1 to 14;
processing the food composition.

2. The method of claim 1, wherein the foam control agent contains 0.5 to 100 percent, by weight, of the composition as shown in Equation (1).

3. The method of claim 1, wherein the foam control agent contains 30 to 100 percent, by weight, of the composition as shown in Equation (1).

4. The method of any one of claims 1 to 3, wherein the quantity of the foam control agent in the food composition is 0.01 to 5 percent, by weight.

5. The method of any one of claims 1 to 3, wherein the quantity of the foam control agent in the food composition is 0.1 to 1 percent, by weight.

6. The method of any one of claims 1 to 5, wherein the foam control agent further comprises a solvent.

7. The method of Claims 1 to 6, wherein the foam control agent further comprises a surfactant or an emulsifier.

8. The method of any one of claim 1 to 7, wherein the food processing comprises one or more of washing, slicing, fermenting, grating, crushing, peeling, or mixing.

9. The method of any one of claim 1 to 8, wherein the foam control agent further comprises an additive comprising an ethylene oxide / propylene oxide block copolymer, butylene oxide / propylene oxide block copolymer, ethylene oxide / butylene oxide block copolymer, a wax, or a silicone-based material.

10. The method of any one of claims 1 to 9, wherein the foodstuff comprises potato derivatives or beet derivatives.

11. A food composition comprising:
a foodstuff and a foam control agent, the foam control agent comprising a composition as shown in Equation (1) 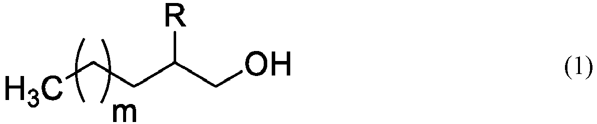 wherein R is propyl, butyl, pentyl, hexyl, heptyl, octyl, nonyl, decyl, undecyl, dodecyl, tridecyl, or tetradecyl, and m is 1 to 14.

12. The food composition of claim 11, wherein the quantity of the foam control agent in the food composition is 0.01 to 5 percent, by weight.

13. The food composition of any one of claims 11 to 12, wherein the foam control agent further comprises a solvent.

14. The food composition of any one of claim 11 to 13, wherein the foam control agent further comprises an additive comprising an ethylene oxide block copolymer, a propylene oxide block copolymer, a butylene oxide block copolymer, a wax, or a silicone-based material.

15. The food composition of any one of claim 11 to 14, wherein the foodstuff comprises potato derivatives or beet derivatives.

## Patentansprüche

1. Ein Verfahren zum Regulieren von Schaum, das Folgendes beinhaltet:
Bereitstellen einer Lebensmittelzusammensetzung, die einen Schaumregulierer und ein Lebensmittel beinhaltet, wobei der Schaumregulierer eine wie in Gleichung (1) gezeigte Zusammensetzung beinhaltet: 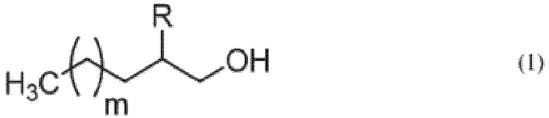 , wobei R Methyl, Ethyl, Propyl, Butyl, Pentyl, Hexyl, Heptyl, Octyl, Nonyl, Decyl, Undecyl, Dodecyl, Tridecyl oder Tetradecyl ist und m 1 bis 14 beträgt;
Verarbeiten der Lebensmittelzusammensetzung.

2. Verfahren gemäß Anspruch 1, wobei der Schaumregulierer 0,5 bis 100 Gewichtsprozent der wie in Gleichung (1) gezeigten Zusammensetzung enthält.

3. Verfahren gemäß Anspruch 1, wobei der Schaumregulierer 30 bis 100 Gewichtsprozent der wie in Gleichung (1) gezeigten Zusammensetzung enthält.

4. Verfahren gemäß einem der Ansprüche 1 bis 3, wobei die Menge des Schaumregulierers in der Lebensmittelzusammensetzung 0,01 bis 5 Gewichtsprozent beträgt.

5. Verfahren gemäß einem der Ansprüche 1 bis 3, wobei die Menge des Schaumregulierers in der Lebensmittelzusammensetzung 0,1 bis 1 Gewichtsprozent beträgt.

6. Verfahren gemäß einem der Ansprüche 1 bis 5, wobei der Schaumregulierer ferner ein Lösungsmittel beinhaltet.

7. Verfahren gemäß den Ansprüchen 1 bis 6, wobei der Schaumregulierer ferner ein Tensid oder einen Emulgator beinhaltet.

8. Verfahren gemäß einem der Ansprüche 1 bis 7, wobei das Verarbeiten des Lebensmittels eines oder mehrere von Waschen, Schneiden, Fermentieren, Reiben, Zerkleinern, Schälen oder Mischen beinhaltet.

9. Verfahren gemäß einem der Ansprüche 1 bis 8, wobei der Schaumregulierer ferner ein Additiv beinhaltet, das ein Ethylenoxid/Propylenoxid-Blockcopolymer, ein Butylenoxid/Propylenoxid-Blockcopolymer, ein Ethylenoxid/Butylenoxid-Blockcopolymer, ein Wachs oder ein Material auf Siliconbasis beinhaltet.

10. Verfahren gemäß einem der Ansprüche 1 bis 9, wobei das Lebensmittel Kartoffelderivate oder Rübenderivate beinhaltet.

11. Eine Lebensmittelzusammensetzung, die Folgendes beinhaltet:
ein Lebensmittel und einen Schaumregulierer, wobei der Schaumregulierer eine wie in Gleichung (1) gezeigte Zusammensetzung beinhaltet: 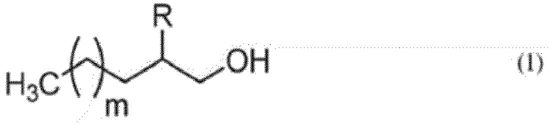 , wobei R Propyl, Butyl, Pentyl, Hexyl, Heptyl, Octyl, Nonyl, Decyl, Undecyl, Dodecyl, Tridecyl oder Tetradecyl ist und m 1 bis 14 beträgt.

12. Lebensmittelzusammensetzung gemäß Anspruch 11, wobei die Menge des Schaumregulierers in der Lebensmittelzusammensetzung 0,01 bis 5 Gewichtsprozent beträgt.

13. Lebensmittelzusammensetzung gemäß einem der Ansprüche 11 bis 12, wobei der Schaumregulierer ferner ein Lösungsmittel beinhaltet.

14. Lebensmittelzusammensetzung gemäß einem der Ansprüche 11 bis 13, wobei der Schaumregulierer ferner ein Additiv beinhaltet, das ein Ethylenoxid-Blockcopolymer, ein Propylenoxid-Blockcopolymer, ein Butylenoxid-Blockcopolymer, ein Wachs oder ein Material auf Siliconbasis beinhaltet.

15. Lebensmittelzusammensetzung gemäß einem der Ansprüche 11 bis 14, wobei das Lebensmittel Kartoffelderivate oder Rübenderivate beinhaltet.

## Revendications

1. Un procédé pour réguler une mousse comprenant :
la fourniture d'une composition alimentaire comprenant un agent de régulation de mousse et une denrée alimentaire,
l'agent de régulation de mousse comprenant une composition telle que représentée dans l'Équation (1) 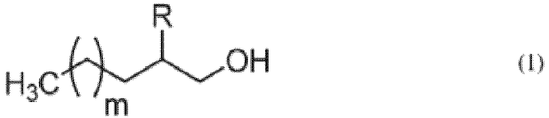 où R est du méthyle, de l'éthyle, du propyle, du butyle, un pentyle, hexyle, heptyle, octyle, nonyle, décyle, undécyle, dodécyle, tridécyle, ou tetradécyle, et m vaut de 1 à 14 ;
le traitement de la composition alimentaire.

2. Le procédé de la revendication 1, où l'agent de régulation de mousse contient de 0,5 à 100 pour cent, en poids, de la composition telle que représentée dans l'Équation (1).

3. Le procédé de la revendication 1, où l'agent de régulation de mousse contient de 30 à 100 pour cent, en poids, de la composition telle que représentée dans l'Équation (1).

4. Le procédé de n'importe laquelle des revendications 1 à 3, où la quantité de l'agent de régulation de mousse dans la composition alimentaire est de 0,01 à 5 pour cent, en poids.

5. Le procédé de n'importe laquelle des revendications 1 à 3, où la quantité de l'agent de régulation de mousse dans la composition alimentaire est de 0,1 à 1 pour cent, en poids.

6. Le procédé de n'importe laquelle des revendications 1 à 5, où l'agent de régulation de mousse comprend en outre un solvant.

7. Le procédé des revendications 1 à 6, où l'agent de régulation de mousse comprend en outre un tensioactif ou un émulsifiant.

8. Le procédé de n'importe laquelle des revendications 1 à 7, où la transformation alimentaire comprend un ou plusieurs éléments parmi le lavage, le tranchage, la fermentation, le râpage, le concassage, le pelage, ou le mélange.

9. Le procédé de n'importe laquelle des revendications 1 à 8, où l'agent de régulation de mousse comprend en outre un additif comprenant un copolymère séquencé d'oxyde d'éthylène/oxyde de propylène, un copolymère séquencé d'oxyde de butylène/oxyde de propylène, un copolymère séquencé d'oxyde d'éthylène/oxyde de butylène, une cire, ou un matériau à base de silicone.

10. Le procédé de n'importe laquelle des revendications 1 à 9, où la denrée alimentaire comprend des dérivés de pomme de terre ou des dérivés de betterave.

11. Une composition alimentaire comprenant :
une denrée alimentaire et un agent de régulation de mousse, l'agent de régulation de mousse comprenant une composition telle que représentée dans l'Équation (1) 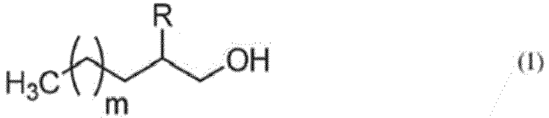 où R est du propyle, du butyle, un pentyle, hexyle, heptyle, octyle, nonyle, décyle, undécyle, dodécyle, tridécyle, ou tetradécyle, et m vaut de 1 à 14.

12. La composition alimentaire de la revendication 11, où la quantité de l'agent de régulation de mousse dans la composition alimentaire est de 0,01 à 5 pour cent, en poids.

13. La composition alimentaire de n'importe laquelle des revendications 11 à 12, où l'agent de régulation de mousse comprend en outre un solvant.

14. La composition alimentaire de n'importe laquelle des revendications 11 à 13, où l'agent de régulation de mousse comprend en outre un additif comprenant un copolymère séquencé d'oxyde d'éthylène, un copolymère séquencé d'oxyde de propylène, un copolymère séquencé d'oxyde de butylène, une cire, ou un matériau à base de silicone.

15. La composition alimentaire de n'importe laquelle des revendications 11 à 14, où la denrée alimentaire comprend des dérivés de pomme de terre ou des dérivés de betterave.
